# EUROPÄISCHE PATENTSCHRIFT

(11) **EP 1 512 606 B1**
(45) Veröffentlichungstag und Bekanntmachung des Hinweises auf die Patenterteilung: **25.10.2006**
(21) Anmeldenummer: 03020214.7
(22) Anmeldetag: 06.09.2003
(51) Int. Cl.: B62B 3/10, A47L 13/51

(54) **Organisationswagen**
Organization trolley
Chariot d'organisation

(43) Veröffentlichungstag der Anmeldung: 09.03.2005
(73) Patentinhaber: VERMOP SALMON GMBH, D-97877 Wertheim (DE)
(72) Erfinder: Salmon, Dirk, 97877 Wertheim (DE)
(74) Vertreter: Durm, Frank

(56) Entgegenhaltungen:
- EP-A- 0 645 129
- DE-C- 10 064 490
- FR-A- 2 833 913
- US-A1- 2002 109 318

## Beschreibung

Die Erfindung betrifft einen Organisationswagen zum Transport und zur Aufbewahrung einer Vielzahl von verschiedenen Gegenständen, insbesondere Reinigungsutensilien, mit einem Fahrgestell, das an seiner Unterseite Räder trägt, und mit in mehreren Ebenen übereinander angeordneten Fächern für die Aufnahme der zu transportierenden Gegenstände.

Derartige Organisationswagen sind in vielfältigen Ausführungen seit langem bekannt. Sie werden beispielsweise bei der Reinigung und Pflege von Gebäuden, im Hotel-Service oder als mobiles Ver- und Entsorgungssystem eingesetzt. Je nach Verwendungszweck finden Reinigungsgeräte wie z.B. Eimer und Putzgeräte, Reinigungsmittel, Toilettenartikel, Wäsche oder auch Behälter für Abfall Platz in den Fächern des Organisationswagens.

Um den Wagen in Form und Größe an den gewünschten Einsatzzweck optimal anpassen zu können, weist er üblicherweise eine modulare Struktur auf. Grundmodul ist immer das Fahrgestell mit den Rädern, das dann mit einer begrenzten Anzahl von Bauelementen nach Art eines Baukastens zu einer fast unbegrenzten Zahl von Varianten aufgerüstet werden kann.

In der älteren Anmeldung EP 03 000 752.0 desselben Anmelders ist ein aktueller, modular aufgebauter Transportwagen für Gegenstände beschrieben. Auf einer Plattform mit Rädern ist ein Gestell aufgebaut, welches Halterungen, z.B. für weitere Plattformen, trägt. Die Plattform ist als ebene Platte ausgebildet und mit im Raster angeordneten Befestigungseinrichtungen ausgestattet. Das Gestell besteht aus vertikalen Stützen, die an die Befestigungseinrichtungen der Plattform ankoppelbar sind. Hierzu sind an den vertikalen Stützen erste Einrastmittel vorgesehen, die mit zweiten Einrastmitteln an den Halterungen formschlüssig zusammenwirken.

Organisationswagen und Reinigungswagen der vorstehend beschriebenen Art haben üblicherweise offene Strukturen, d.h. nicht nur die einzelnen Elemente, aus denen sie zusammengesetzt sind, sondern auch die darauf abgestellten Gegenstände sind von allen Seiten offen zugänglich. Dies ist in zweierlei Hinsicht nachteilig: Zum einen sind die zu transportierenden Gegenstände weder gegen Herausfallen noch gegen Staub oder unbefugten Zugriff geschützt; zum anderen bietet ein vollgepackter Organisationswagen herkömmlicher Art keinen schönen Anblick, wie jeder Besucher eines Krankenhauses oder Gast eines Hotels bestätigen wird.

Die Aufgabe besteht also darin, einen Organisationswagen mit flexiblem modularen Aufbau so weiter zu entwickeln, dass die darauf transportierten Gegenstände gegen Herausfallen, Staub und unbefugten Zugriff geschützt sind und gleichzeitig der ganze Wagen ein optisch ansprechendes Erscheinungsbild erhält. Die Lösung dieser Aufgabe erfolgt durch einen Organisationswagen gemäß Anspruch 1. Bevorzugte Ausführungen ergeben sich aus den abhängigen Ansprüchen.

Bei dem erfindungsgemäßen Organisationswagen bilden die Bodenplatte, die Vertikalstützen und die Querprofilträger die tragende Struktur, welche um die Vertikalholme und flächige Verkleidungselemente ergänzt wird. Zusammen mit den Querprofilträgern bilden die Vertikalholme die Seitenflächen des Wagens, die von den Verkleidungselementen geschlossen werden. Da die Vertikalholme und die Verkleidungselemente nicht zur tragenden Struktur des Organisationswagens gehören, können sie relativ leicht ausgeführt werden. Das Gesamtgewicht des Organisationswagens erhöht sich dadurch nur unwesentlich. Ein weiterer Vorteil der vorgeschlagenen Konstruktion besteht darin, dass bei Bedarf nur ein bestimmter Abschnitt oder gar nur ein einzelnes Fach des Wagens mit Verkleidungselementen geschlossen ausgebildet werden kann, während andere Abschnitte bzw. Fächer offen bleiben. Beispielsweise lässt sich nur die Stirnseite und eine Längsseite des Wagens mit Verkleidungselementen schließen, während die Fächer von der gegenüberliegenden Seite her offen zugänglich bleiben. Damit lässt sich der erfindungsgemäße Organisationswagen dem jeweiligen Einsatzzweck optimal anpassen.

Aus der FR 2 833 913 A1 ist ein Organisationswagen bekannt, der ein Fahrgestell mit einer Bodenplatte und mehrere, übereinander angeordnete Fächer umfasst. Auf die Bodenplatte sind vertikale Holme montiert, an denen flächige Verkleidungselemente befestigt sind. Diese Verkleidungselemente erstrecken sich über die gesamte Höhe des Wagens. Bei dem erfindungsgemäßen Wagen dagegen sind die Verkleidungselemente zwischen zwei benachbarte Querprofilträger oder zwischen zwei Querprofilträger und Vertikalholme eingesetzt, so dass die Querprofilträger und/oder Vertikalholme Bestandteil der geschlossenen Außenwand sind. Beim Organisationswagen nach FR 2 833 913 A1 gehören die Vertikalholme mit zur tragenden Struktur, wohingegen beim Organisationswagen nach der Erfindung die Vertikalholme nur bei Bedarf und zum Zwecke der Verkleidung an die Enden der Querprofilträger montiert werden, um ein Verkleidungselement zu halten.

Die US 2002/0109318 A1 zeigt einen Organisationswagen mit Fahrgestell, Rädern, vertikalen Stützpfeilern und mehreren, übereinander angeordneten Aufbewahrungsfächern. Es sind ferner großflächige Verkleidungselemente wie eine Tür und eine Front vorhanden. Demgegenüber hat der erfindungsgemäße Organisationswagen eine modulare Struktur aus Querprofilträgern und Vertikalholmen mit zwischengesetzten ebenen Verkleidungsteilen, wobei diese modulare Struktur zur Herstellung einer Verkleidung unabhängig von der tragenden Struktur des Wagens ist.

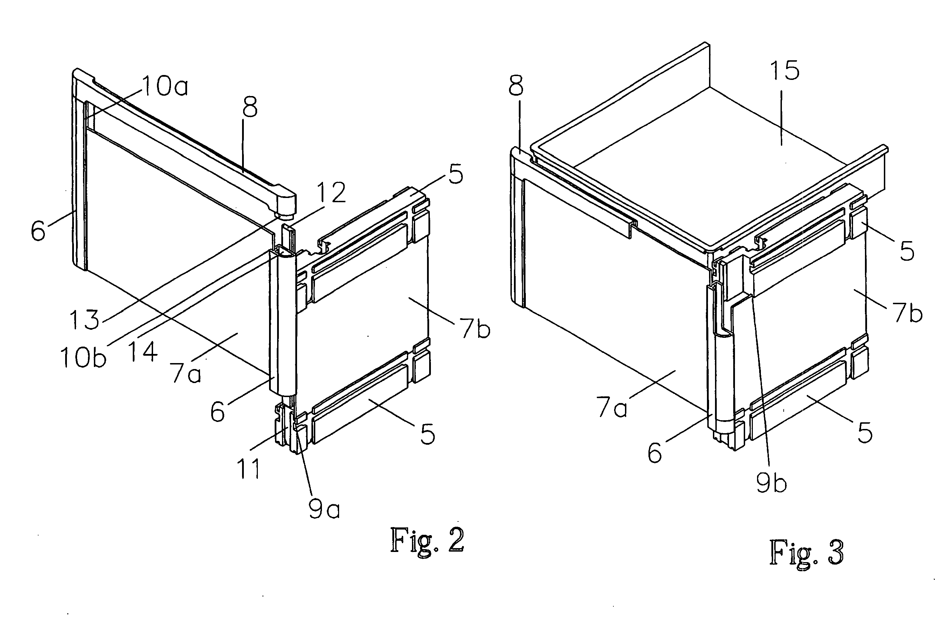

Die EP 0 645 129 A2 offenbart einen Utensilienwagen mit einem Seitenelement und einer Anzahl übereinander angeordneter Paneelenteile. Die Rückseite (vergleiche Figur 2) wird von einem unteren Paneel und einem oberen Paneel gebildet. Auch dieser vorbekannte Wagen zeigt nicht die erfindungsgemäße Trennung in eine tragende Struktur und eine davon unabhängige, modulare aufgebaute Verkleidung, umfassend Vertikalprofilträger, Vertikalholme und zwischengesetzte flächige Verkleidungselemente.

Bevorzugt wird eine Ausführung des Fahrgestells, bei der jeweils zwei benachbarte Vertikalstützen im Bereich Ihrer oberen Enden durch einen Bügel miteinander verbunden sind. Das erhöht die Stabilität der tragenden Struktur des Wagens.

Vorteilhaft sind die Vertikalstützen auf der Bodenplatte im Raster angeordnet. Bodenplatte, Vertikalstützen und Querprofilträger sind dabei vorzugsweise so ausgebildet, wie in der älteren Anmeldung EP 03 000 752.0 desselben Anmelders im Einzelnen beschrieben.

Die mechanische Verbindung zwischen den Verkleidungselementen und den diese haltenden Querprofilträgern geschieht vorzugsweise durch Nuten, die im Bereich der Außenseiten der Querprofilträger vorgesehen sind und in die das Verkleidungselement mit seinem oberen oder unteren Rand einschiebbar ist. In gleicher Weise dienen gegeneinander weisende Nuten an den Vertikalholmen zur Aufnahme der seitlichen Ränder eines Verkleidungselementes. Die Verkleidungselemente können aber auch in anderer Weise fest oder lösbar mit den Querprofilträgern bzw. den Vertikalholmen mechanisch verbunden werden, beispielsweise durch eine Nut- und Federverbindung, Steckverbindern, Klemmmitteln oder auch Schrauben.

Zur Befestigung der Vertikalholme an den Enden der Querprofilträger dient vorzugsweise eine formschlüssige Klemmverbindung in Form von T-Nuten an den Stirnseiten der Querprofilträger und hierzu korrespondierende T-Leisten an den Vertikalholmen, welche in die T-Nuten der Querprofilträger von oben oder unten einschiebbar sind.

Eine sinnvolle Ergänzung des erfindungsgemäßen Organisationswagens stellt eine horizontale Abschlussleiste dar, welche die oberen Enden zweier benachbarter Vertikalholme miteinander verbindet. Hierzu kann die Abschlussleiste an ihrer Unterseite Zapfen tragen, welche in korrespondierende Aussparungen in den Stirnseiten der Vertikalholme eingreifen. Zweckmäßig umfasst die Abschlussleiste den oberen Rand eines flächigen Verkleidungselementes. Eine derart ausgebildete Abschlussleiste ergänzt zwei, parallel und im Abstand zueinander angeordnete Vertikalholme zu einem Rahmen, der das Verkleidungselement umfasst. Da auch diese Abschlussleiste ebenso wie die Vertikalholme keine tragende Funktion hat, kann ihre äußere Form vor allem nach ästhetischen Gesichtspunkten gestaltet werden. Insbesondere kann die Abschlussleiste eine geschlossene glatte Außenkontur aufweisen, was bei einem Organisationswagen, der auch für Reinigungszwecke eingesetzt wird, aus Hygiene- und Pflegegründen wichtig ist.

Die zwischen die Querprofilträger und die Vertikalholme eingesetzten Verkleidungselemente können einfach als ebene Verkleidungsplatten ausgebildet sein. Die Verkleidungselemente können aber auch als öffenbare Türen ausgebildet sein, die dann mittels eines Scharniers an einem Vertikalholm schwenkbar befestigt sind. Der benachbarte Vertikalholm kann dann mit einem Anschlag für die Tür versehen werden. Ist die Tür zudem mit einem Schloss ausgerüstet, so können einzelne Fächer oder auch ein ganzer Abschnitt des Organisationswagens fest verschlossen werden, um die darin aufbewahrten Gegenstände gegen unbefugten Zugriff zu sichern.

Ein Ausführungsbeispiel der Erfindung wird nachstehend anhand der beigefügten Zeichnungen näher beschrieben. Es zeigen:
- Figur 1: einen Organisationswagen mit geschlossen ausgebildeten Seitenwänden, in einer perspektivischen Ansicht schräg von oben;
- Figur 2: die obere linke Ecke des Organisationswagens von Figur 1, in einer Explosionsdarstellung;
- Figur 3: die Ecke von Figur 2 mit teilweise geschnitten dargestellten Einzelteilen und eine zusätzliche Wanne;
- Figur 4: die Ecke eines Organisationswagen ähnlich wie in Figur 2, mit einer Tür in geöffnetem Zustand;
- Figur 5: die Ecke des Organisationswagens von Figur 4 mit geschlossener Tür.

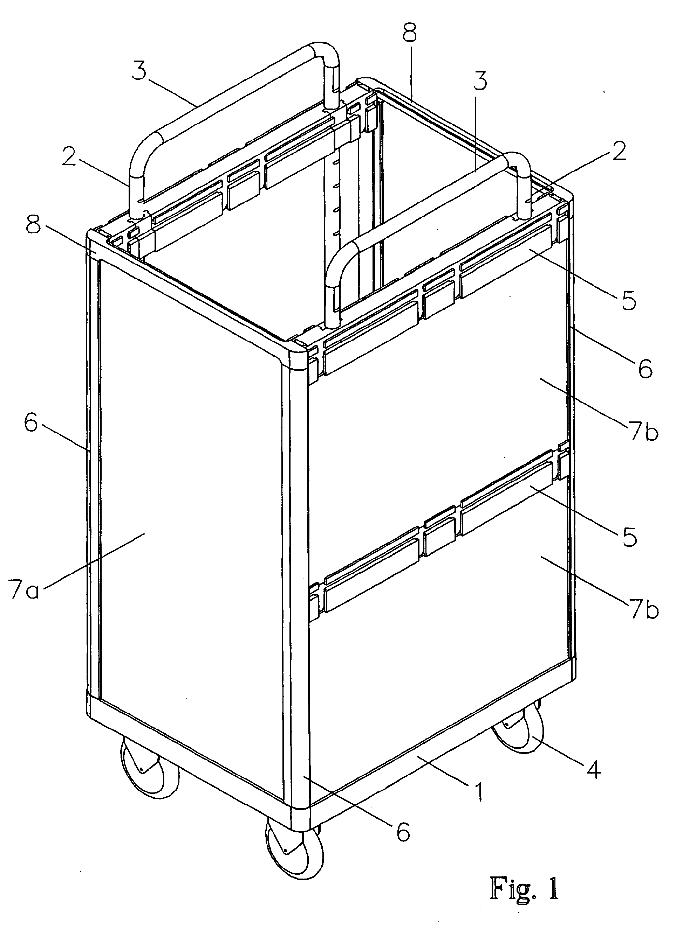

Der in Figur 1 beispielhaft dargestellte Organisationswagen hat ein Fahrgestell, das im Wesentlichen aus einer rechteckigen Bodenplatte 1 und vier Vertikalstützen 2 besteht, die mit der Bodenplatte 1 fest verbunden sind. Die Vertikalstützen 2 sind von Rundrohren gebildet. Jeweils zwei benachbarte Vertikalstützen 2 sind im Bereich ihres oberen Endes durch einen Bügel 3 miteinander verbunden. An der Unterseite der Bodenplatte 1 sind an den vier Ecken schwenkbare Räder 4 angeschraubt.

An den Vertikalstützen 2 sind Querprofilträger 5 aus Kunststoff höhenverschiebbar befestigt. Hierzu weisen die Querprofilträger 5 die Vertikalstützen 2 umgreifende Klammerelemente auf. Die Querprofilträger 5 weisen Halte- und Befestigungsmittel in Form von abgewinkelten Stegen, Klemmleisten und Nuten zur Halterung von (nicht dargestellten) Fachböden auf. Die konstruktive Ausgestaltung der Bodenplatte 1, der Vertikalstützen 2, des Bügels 3 und insbesondere der Querprofilträger 5 sowie die hier verwendete Verbindungstechnik sind in der Anmeldung EP 03 000 752.0 desselben Anmelders im Detail beschrieben.

Bodenplatte 1, Vertikalstützen 2, Bügel 3 und die Querprofilträger 5 bilden die modular aufgebaute und beliebig erweiterbare tragende Struktur des Organisationswagens.

An den vorderen und hinteren Enden der Querprofilträger 5 sind insgesamt vier Vertikalholme 6 befestigt. Verkleidungselemente in Form von ebenen Verkleidungsplatten 7a, 7b sind jeweils zwischen zwei Querprofilträger 5 bzw. zwei Vertikalholme 6 eingesetzt und bilden die Seitenwände des Organisationswagens. Zwei Abschlussleisten 8 umfassen die oberen Ränder der Verkleidungsplatten 7a.

Wie in den Figuren 2 und 3 erkennbar, weisen die Querprofilträger 5 im Bereich ihrer Außenseiten nach oben offene Nuten 9a und spiegelbildlich nach unten offene Nuten 9b auf, in welche die oberen bzw. unteren Ränder der Verkleidungsplatte 7b eingeschoben sind. Die Vertikalholme 6 weisen gleichfalls gegeneinander weisende Nuten 10a, 10b auf, welche den linken bzw. rechten Rand der dort eingesetzten Verkleidungsplatte 7a aufnehmen.

Insbesondere aus Figur 2 wird deutlich, dass die Verkleidungsplatte 7a einfach von oben zwischen die Nuten 10a, 10b zweier benachbarter Vertikalholme 6 eingeschoben werden kann, und wie in ähnlicher Weise die Verkleidungsplatte 7b von vorne in die Nuten 9a, 9b zweier benachbarter Querprofilträger 5 einschiebbar ist.

In Figur 2 lässt sich ferner erkennen, dass die Querprofilträger 5 an ihrer Stirnseite eine vertikal verlaufende T-Nut aufweisen, in welche eine korrespondierende T-Leiste 12 an der Rückseite der Vertikalholme 6 einschiebbar sind. Zum Schluss wird die Abschlussleiste 8 auf die Vertikalholme 6 und den oberen Rand der Verkleidungsplatte 7a aufgesetzt. Hierzu trägt die Abschlussleiste 8 an ihrer Unterseite Zapfen 13, welche korrespondierende Aussparungen 14 in den Stirnseiten der Vertikalholme 6 klemmend eingreifen. Die Vertikalholme 6 und die Abschlussleiste 8 weisen eine glatte, im Bereich der vertikalen Kanten abgerundete Außenkontur auf.

Die Montage der Vertikalholme 6, der Verkleidungsplatten 7a bzw. 7b und der Abschlussleiste 8 erfordern kein Werkzeug und können vom Benutzer auch jederzeit nachträglich und bedarfsweise durchgeführt werden.

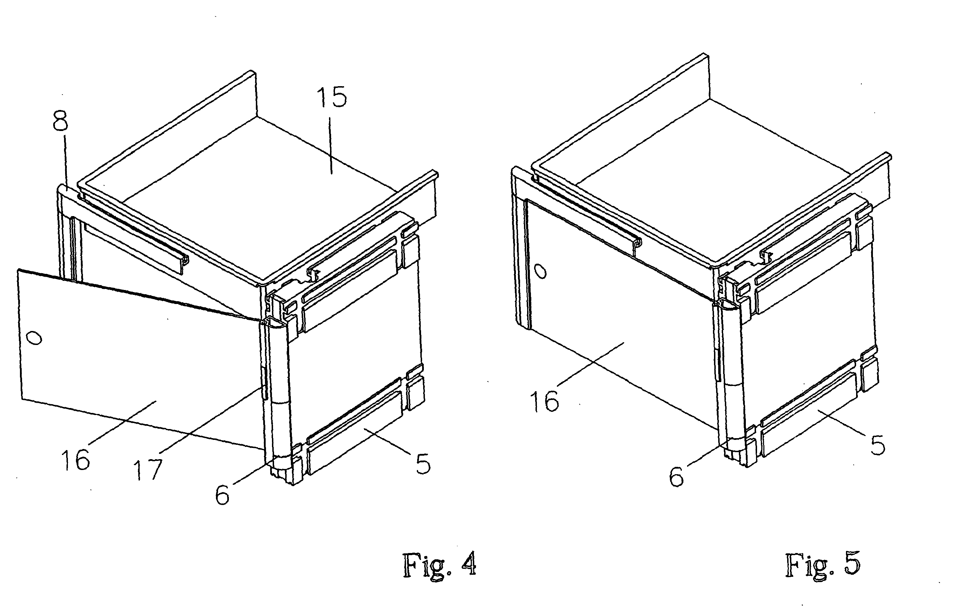

In Figur 4 ist als Verkleidungselement eine Tür 16 mittels eines Scharniers 17 an den rechten der dort zu sehenden Vertikalholme 6 schwenkbar befestigt. In Figur 5 ist die Tür 16 in geschlossenem Zustand dargestellt.

Vertikalholme 6, Verkleidungsplatten 7a, 7b und Abschlussleisten 8 können so miteinander kombiniert werden, dass der Organisationswagen z.B. nur an der Stirnseite und an einer Längsseite geschlossene Wände hat, wohingegen eine Seite offen bleibt, um bequem Gegenstände einzuladen oder herauszunehmen. Mittels zusätzlicher Türen 16 lässt sich aber auch ein Organisationswagen mit ringsum geschlossenen Seitenwänden realisieren. Den Abschluss nach oben hin bildet in der Regel ein herausnehmbarer Fachboden, der beispielsweise als seitliche Wanne 15 ausgeführt sein kann, wie in den Figuren 3, 4 und 5 dargestellt.

### Zusammenstellung der Bezugszeichen

- 1: Bodenplatte
- 2: Vertikalstütze
- 3: Bügel
- 4: Rad
- 5: Querprofilträger
- 6: Vertikalholm
- 7a, 7b: Verkleidungsplatten
- 8: Abschlussleiste
- 9a, 9b: Nuten (in 5)
- 10a, 10b: Nuten (in 6)
- 11: T-Nut (an 5)
- 12: T-Leiste (an 6)
- 13: Zapfen (von 8)
- 14: Aussparung (in 6)
- 15: Wanne
- 16: Tür
- 17: Scharnier (von 16)
- 18: Wanne

## Patentansprüche

1. Organisationswagen zum Transport und zur Aufbewahrung einer Vielzahl von verschiedenen Gegenständen, insbesondere Reinigungsutensilien, mit
- in mehreren Ebenen übereinander angeordneten Fächern für die Aufnahme der zu transportierenden Gegenstände;
- einem Fahrgestell, das eine Bodenplatte (1) und darauf angeordnete Vertikalstützen (2) umfasst und an seiner Unterseite Räder (4) trägt;
- einer Anzahl von Querprofilträgern (5), die jeweils an mindestens einer Vertikalstütze (2) befestigt sind und Haltemittel für Fachböden aufweisen;
- wobei die Bodenplatte (1), die Vertikalstützen (2) und die Querprofilträger (5) die tragende Struktur des Organisationswagens bilden;
- wenigstens zwei zusätzlichen, an die tragende Struktur anmondierbaren Vertikalholmen (6), die jeweils an den Enden mindestens zweier benachbarter Querprofilträger (5) befestigt sind;
- flächige Verkleidungselemente, die zwischen zwei benachbarten Querprofilträgern (5) und/oder Vertikalholmen (6) eingesetzt sind.

2. Organisationswagen nach Anspruch 1, **dadurch gekennzeichnet, dass** jeweils zwei benachbarte Vertikalstützen (2) im Bereich ihrer oberen Enden durch einen Bügel (3) miteinander verbunden sind.

3. Organisationswagen nach Anspruch 1 oder 2, **dadurch gekennzeichnet, dass** die Vertikalstützen (2) auf der Bodenplatte (1) im Raster angeordnet sind.

4. Organisationswagen nach einem der Ansprüche 1 bis 3, **dadurch gekennzeichnet, dass** die Querprofilträger (5) im Bereich ihrer Außenseiten Nuten (9a, 9b) aufweisen, in die der Rand eines Verkleidungselementes einschiebbar ist.

5. Organisationswagen nach einem der Ansprüche 1 bis 4, **dadurch gekennzeichnet, dass** die Vertikalholme (6) gegeneinander weisende Nuten (10a, 10b) aufweisen, in die der Rand eines Verkleidungselementes einschiebbar ist.

6. Organisationswagen nach einem der Ansprüche 1 bis 3, **dadurch gekennzeichnet, dass**
- die Querprofilträger (5) an zumindest einer Stirnseite eine vertikal verlaufende T-Nut (11) aufweisen;
- die Vertikalholme (6) korrespondierende T-Leisten (12) aufweisen, welche in die T-Nuten der Querprofilträger einschiebbar sind.

7. Organisationswagen nach einem der Ansprüche 1 bis 6, **gekennzeichnet durch** eine horizontale Abschlussleiste (8), welche die oberen Enden zweier benachbarter Vertikalholme (6) miteinander verbindet und den oberen Rand eines Verkleidungselementes umfasst.

8. Organisationwagen nach Anspruch 7, **dadurch gekennzeichnet , dass** die Abschlussleiste (8) an ihrer Unterseite Zapfen (13) aufweist, welche in korrespondierende Aussparungen (14) in den Stirnseiten der Vertikalholme (6) eingreifen.

9. Organisationswagen nach einem der Ansprüche 1 bis 8, **dadurch gekennzeichnet, dass** die Verkleidungselemente als ebene Verkleidungsplatten (7a, 7b) ausgebildet sind.

10. Organisationswagen nach einem der Ansprüche 1 bis 8, **dadurch gekennzeichnet, dass** die Verkleidungselemente als öffenbare Türen (16) ausgebildet sind, welche mittels eines Scharniers (17) an einem Vertikalholm schwenkbar befestigt sind.

## Claims

1. An organisation trolley for transporting and storing a plurality of different articles, particularly cleaning utensils, including
- compartments arranged above one another in a plurality of planes for accommodating the articles to be transported
- a frame, which includes a base plate (1) and vertical pillars (2) arranged on it and carries wheels (4) on its underside;
- a number of transverse profiled supports (5), which are each secured to at least one vertical pillar (2) and include retaining means for compartment bases;
- wherein the base plate (1), vertical pillars (2) and the transverse profiled supports (5) constitute the support structure of the organisation trolley;
- at least two additional vertical struts (6), which may be attached to the support structure and are each connected to the ends of at least two adjacent transverse profiled supports (5);
- laminar cover elements, which are inserted between two adjacent transverse profiled supports (5) and/or vertical struts (6)

2. An organisation trolley as claimed in Claim 1, **characterised in that** two adjacent vertical supports (2) are connected together in the region of their upper ends by a respective handle (3).

3. An organisation trolley as claimed in Claim 1 or 2, **characterised in that** the vertical supports (2) are arranged on the base plate (1) in a grid.

4. An organisation trolley as claimed in one of Claims 1 to 3, **characterised in that** the transverse profiled supports (4) have grooves (9a, 9b) in the region of their outer surfaces, into which the edge of a cover element may be inserted.

5. An organisation trolley as claimed in one of Claims 1 - 4, **characterised in that** the vertical struts have grooves (10a, 10b) directed towards one another, into which the edge of a cover element may be inserted.

6. An organisation trolley as claimed in one of Claims 1 - 3 **characterised in that**
- the transverse profiled supports (5) have a vertically extending T-shaped groove (11) on at least one end surface;
- the vertical struts have corresponding T-shaped bars (12), which may be inserted into the T-shaped grooves in the transverse profiled supports.

7. An organisation trolley as claimed in one of Claims 1 - 6, **characterised by** a horizontal termination bar (8), which connects the upper ends of two adjacent vertical struts (6) together and surrounds the upper edge of a cover element.

8. An organization trolley as claimed in Claim 7, **characterised in that** the termination bar (8) has pegs (13) on its underside which engage into corresponding openings (14) in the end surfaces of the vertical struts (6).

9. An organisation trolley as claimed in one of Claims 1 - 8, **characterised in that** the cover elements are constructed in the form of flat cover plates (7a, 7b).

10. An organisation trolley as claimed in one of Claims 1 - 8, **characterised in that** the cover elements are constructed in the form of openable doors (16), which are pivotably connected to a vertical strut by means of a hinge (17).

## Revendications

1. Chariot d'organisation pour le transport et l'entreposage d'une multiplicité d'objets différents, en particulier des ustensiles de nettoyage, comprenant :
- des compartiments disposés les uns au-dessus des autres dans plusieurs plans pour recevoir les objets à transporter ;
- un châssis, qui comporte une plaque de fond (1) et des montants verticaux (2) disposés sur cette dernière et supporte des roues (4) sur son côté inférieur ;
- un nombre de supports profilés transversaux (5), qui sont respectivement fixés sur au moins un montant vertical (2) et présentent des moyens de fixation pour des fonds de compartiments ;
- la plaque de fond (1), les montants verticaux (2) et les supports profilés transversaux (5) formant la structure portante du chariot d'organisation ;
- au moins deux longerons verticaux supplémentaires (6), qui peuvent être montés sur la structure portante, étant fixés respectivement sur les extrémités d'au moins deux supports profilés transversaux voisins (5) ;
- des éléments d'habillage plans, qui sont montés entre deux supports profilés transversaux voisins (5) et/ou des longerons verticaux (6).

2. Chariot d'organisation suivant la revendication 1, **caractérisé en ce que** deux montants verticaux voisins (2) sont respectivement assemblés entre eux par un étrier (3) dans la zone de leurs extrémités supérieures.

3. Chariot d'organisation suivant l'une des revendications 1 et 2, **caractérisé en ce que** les montants verticaux (2) sont disposés en quadrillage sur la plaque de fond (1).

4. Chariot d'organisation suivant l'une des revendications 1 à 3, **caractérisé en ce que** les supports profilés transversaux (5) présentent dans la zone de leurs côtés extérieurs des gorges (9a, 9b), dans lesquelles peut s'insérer le bord d'un élément d'habillage.

5. Chariot d'organisation suivant l'une des revendications 1 à 4, **caractérisé en ce que** les longerons verticaux (6) présentent des gorges (10a, 10b) orientées les unes par rapport aux autres, dans lesquelles peut s'insérer le bord d'un élément d'habillage.

6. Chariot d'organisation suivant l'une des revendications 1 à 3, **caractérisé en ce que**
- les supports profilés transversaux (5) présentent au moins sur un côté frontal une gorge en T (11) s'étendant verticalement ;
- les longerons verticaux (6) présentent des languettes en T correspondantes (12), qui peuvent s'insérer dans les gorges en T des supports profilés transversaux.

7. Chariot d'organisation suivant l'une des revendications 1 à 6, **caractérisé par** une barre de fermeture horizontale (8), qui assemble entre elles les extrémités supérieures de deux longerons verticaux voisins (6) et entoure le bord supérieur d'un élément d'habillage.

8. Chariot d'organisation suivant la revendication 7, **caractérisé en ce que** la barre de fermeture (8) présente sur son côté inférieur des tourillons (13), qui s'engagent dans des évidements correspondants (14) des côtés frontaux des longerons verticaux (6).

9. Chariot d'organisation suivant l'une des revendications 1 à 8, **caractérisé en ce que** les éléments d'habillage sont configurés sous forme de panneaux d'habillage plans (7a, 7b).

10. Chariot d'organisation suivant l'une des revendications 1 à 8, **caractérisé en ce que** les éléments d'habillage sont réalisés sous forme de portes (16) ouvrables, qui sont fixées de manière pivotante sur un longeron vertical au moyen d'une charnière (17).
